# EUROPEAN PATENT APPLICATION

(11) **EP 4 617 174 A1**
(43) Date of publication of application: **17.09.2025**
(21) Application number: 25163633.8
(22) Date of filing: 13.03.2025
(51) Int. Cl.: B64D 29/06, F16H 25/22, F16H 25/24, F16H 25/20

(54) **ELECTROMECHANICAL ACTUATOR ARCHITECTURE**

(30) Priority: 13.03.2024 IN 202411018122
(71) Applicant: Goodrich Actuation Systems Limited, Wolverhampton, West Midlands WV10 7EH (GB)
(72) Inventor: KANNAN, Rajesh, 560040 Bangalore, KA (IN); TRIPATHI, Amit Kumar, Banbury, Oxfordshire, OX16 5NU (GB); PANDIAN, Navaneetha, 560037 Bangalore (IN); VEERARAPU, Subrahmanyam, 560036 Bangalore, KA (IN); NAVADKAR, Amol Raghunath, 560037 Bangalore, KA (IN); DAVIES, Stephen Harlow, Shrewsbury, SY4 1FA (GB)
(74) Representative: Dehns

(57) **Abstract**

An electromechanical actuator architecture (101) is provided for a cowl door (102) of an aircraft engine nacelle (103). The electromechanical actuator architecture includes a first clutch (120), a no-back unit (130) including a friction clutch (131) and a one-way clutch (132) and a ball screw (160) with two coaxial external cylinders (170). Torque generated for actuator extension is transferable to the ball screw and the coaxial external cylinder via the first clutch. During actuator retraction, cowl door weight and an aerodynamic load compress the coaxial external cylinder and the ball screw with loads that are transferred to the no-back unit, which is configured to maintain actuator position in an event generation of the torque ceases.

## Description

### CROSS-REFERENCE TO RELATED APPLICATIONS

This application claims the benefit of Indian Patent Application No. 202411018122 filed March 13, 2024.

### BACKGROUND

The present invention relates to aircraft and, more particularly, to an electromechanical actuator architecture.

In aeronautics, jet aircraft include fuselage with aerodynamic wings extending outwardly from either side of the fuselage. Engines, such as gas turbine engines, can be supported below the wings in nacelles. The nacelles each include outer casings with cowl doors that can be opened or closed for maintenance or inspection when the aircraft is grounded. The cowl doors can be opened and closed by specially designed actuators.

### BRIEF DESCRIPTION

According to an aspect of the invention, an electromechanical actuator architecture is provided for a cowl door of an aircraft engine nacelle. The electromechanical actuator architecture includes a first clutch, a no-back unit including a friction clutch and a one-way clutch and a ball screw with two coaxial external cylinders. Torque generated for actuator extension is transferable to the ball screw and the coaxial external cylinder via the first clutch. During actuator retraction, cowl door weight and an aerodynamic load compress the coaxial external cylinder and the ball screw with loads that are transferred to the no-back unit, which is configured to maintain actuator position in an event generation of the torque ceases.

In embodiments, the electromechanical actuator architecture further includes a motor configured to generate the torque and a modular gear train operably interposed between the motor and the first clutch and between the motor and the no-back unit.

In embodiments, the modular gear train includes a spur gear train and an epicyclic gear train.

In embodiments, at least the first clutch is configured to generate a resistive torque during rotation which is proportional to an applied axial load.

In embodiments, the first clutch includes one of a Kevlar^{™}-based friction disc and a skewed roller, the friction clutch of the no-back unit includes one of a Kevlar^{™}-based friction disc and a skewed roller and the one-way clutch of the no-back unit includes one of a roller clutch and a sprag clutch.

In embodiments, the ball screw with the coaxial external cylinder includes a shroud and an inner cylinder surrounded by the shroud.

In embodiments, the ball screw with the coaxial external cylinder includes at least one of steel cylinders, composite cylinders and hybrid steel and composite cylinders.

According to an aspect of the invention, an electromechanical actuator architecture is provided for a cowl door of an aircraft engine nacelle. The electromechanical actuator architecture includes a motor configured to generate torque, a first clutch, a no-back unit including a friction clutch and a one-way clutch and a ball screw with a coaxial external cylinder. Torque generated by the motor for cowl door extension is transferable to the cowl door by the ball screw and the coaxial external cylinder via the first clutch. During cowl door retraction, cowl door weight and an aerodynamic load compress the coaxial external cylinder and the ball screw with loads transferred to the no-back unit, which is configured to maintain a cowl door position in an event torque generation by the motor ceases.

In embodiments, the electromechanical actuator architecture further includes a modular gear train operably interposed between the motor and the first clutch and between the motor and the no-back unit. The modular gear train includes a spur gear train and an epicyclic gear.

In embodiments, at least the first clutch is configured to generate a resistive torque during rotation which is proportional to an applied axial load.

In embodiments, the first clutch includes one of a Kevlar^{™}-based friction disc and a skewed roller, the friction clutch of the no-back unit includes one of a Kevlar^{™}-based friction disc and a skewed roller and the one-way clutch of the no-back unit includes one of a roller clutch and a sprag clutch.

In embodiments, the ball screw with the coaxial external cylinder includes a shroud and an inner cylinder surrounded by the shroud.

In embodiments, the ball screw with the coaxial external cylinder includes at least one of steel cylinders, composite cylinders and hybrid steel and composite cylinders.

According to an aspect of the invention, an electromechanical actuator architecture is provided for a cowl door of an aircraft engine nacelle. The electromechanical actuator architecture includes a motor configured to generate torque, a first clutch, a no-back unit including a friction clutch and a one-way clutch, a modular gear train operably interposed between the motor and the first clutch and between the motor and the no-back unit and a ball screw with a coaxial external cylinder. Torque generated by the motor for cowl door extension is transferable to the cowl door by the ball screw and the coaxial external cylinder via the module gear train and the first clutch. During cowl door retraction, cowl door weight and an aerodynamic load compress the coaxial external cylinder and the ball screw with loads transferred to the no-back unit, which is configured to maintain a cowl door position in an event torque generation by the motor ceases.

In embodiments, the modular gear train includes a spur gear train and an epicyclic gear train.

In embodiments, at least the first clutch is configured to generate a resistive torque during rotation which is proportional to an applied axial load.

In embodiments, the first clutch includes one of a Kevlar^{™}-based friction disc and a skewed roller, the friction clutch of the no-back unit includes one of a Kevlar^{™}-based friction disc and a skewed roller and the one-way clutch of the no-back unit includes one of a roller clutch and a sprag clutch.

In embodiments, the ball screw with the coaxial external cylinder includes a shroud and an inner cylinder surrounded by the shroud.

In embodiments, the ball screw with the coaxial external cylinder includes at least one of steel cylinders, composite cylinders and hybrid steel and composite cylinders.

According to an aspect of the invention, a centralized control system is provided for controlling extensions and retractions of cowl doors of engine nacelles of an aircraft. The centralized control system includes an electromechanical actuator architecture for each of the cowl doors and a single centralized control unit configured to operate the motor of each of the electromechanical actuator architectures.

Additional features and advantages are realized through the techniques of the present invention. Other embodiments and aspects of the invention are described in detail herein and are considered a part of the claimed technical concept. For a better understanding of the invention with the advantages and the features, refer to the description and to the drawings.

### BRIEF DESCRIPTION OF THE DRAWINGS

For a more complete understanding of this invention, reference is now made to the following brief description, taken in connection with the accompanying drawings and detailed description, wherein like reference numerals represent like parts:
FIG. 1 is an axial view of an engine nacelle of an aircraft with cowl doors in accordance with embodiments;
FIG. 2A is a side schematic view of an electromechanical actuator architecture for use with a cowl door of an engine nacelle of an aircraft in accordance with embodiments;
FIG. 2B is a side schematic view of an enlarged portion of FIG. 2A in accordance with embodiments;
FIG. 3 is a side view illustrating a torque path through the electromechanical actuator architecture of FIG. 2 for torque generated for extension of a cowl door in accordance with embodiments;
FIG. 4 is a side view illustrating torque and load paths through the electromechanical actuator architecture of FIG. 2 for retraction of a cowl door when torque generation ceases in accordance with embodiments;
FIG. 5 is an exploded perspective view of first and second skewed roller clutches of the electromechanical actuator architecture of FIGS. 2-4 in accordance with embodiments;
FIG. 6 is a perspective view of a Kevlar^{™}-based friction disc of a first clutch of an electromechanical actuator architecture in accordance with embodiments;
FIG. 7 is a perspective view of a skewed roller and a Kevlar^{™}-based friction disc of a friction disc of a no-back unit of an electromechanical actuator architecture in accordance with embodiments;
FIG. 8 is a perspective view of a one-way roller clutch and a one-way sprag clutch of a one-way clutch of a no-back unit of an electromechanical actuator architecture in accordance with embodiments; and
FIG. 9 is a schematic diagram illustrating a centralized control system for controlling extensions and retractions of cowl doors of engine nacelles of an aircraft in accordance with embodiments.

### DETAILED DESCRIPTION

Currently, nacelle doors or cowl doors for aircraft are operated with hydraulic power door opening systems (PDOS) actuators for opening and closing the cowl doors. These actuators are operated with the help of power packs connected to the actuators via hoses along engine peripheries. With technological advancement, it has become evident that cleaner, greener, lighter and electrified actuation systems are needed for further improvements of the actuators and their associated systems.

Thus, as will be described below, an electromechanical actuator architecture is provided and is modular in design with electrical and mechanical components that can be scaled to any engine family. The electromechanical actuator architecture generally includes a common centralized circuit board that controls the various systems and that effectively replaces conventional power packs and hose lines by which conventional hydraulic actuators are controlled.

The proposed electromechanical actuator architecture exhibits a modular and compact design that includes a skewed clutch roller and a skewed no-back roller. By varying the skew angles of the skewed clutch roller and the skewed no-back roller, a resistive torque can be varied to maintain a given spatial envelope. The electromechanical actuator architecture further includes a planetary gear train that allows for an increased or decreased number of planetary gear stages based on torque and speed requirements, a ball screw mechanism in which different ball screw sizes can be used based on required stroke, extension and retraction times and a co-axial cylinder's structure that is relatively light while meeting stringent vibration requirements.

For vibration, bending modes of a screw are critical and a minimum section near a clutch region tends to be a weak section in transferring vibration energy to a jack head and its associated structure. This is overcome by bringing the shroud in a vibration load path where the vibration energy from the screw proceeds to a shroud via a nut and cylinders and then to the jack head and the associated structure. As such, a majority of vibratory energy bypasses the minimum section of the screw which is not critically loaded. In addition to the vibration advantage, the shroud also improves buckling capacity by supporting the screw. The shroud and an inner cylinder can be made of steel or composite cylinders.

The proposed electromechanical actuator architecture enables an option of a centralized control unit and a dedicated control unit for multiple actuators.

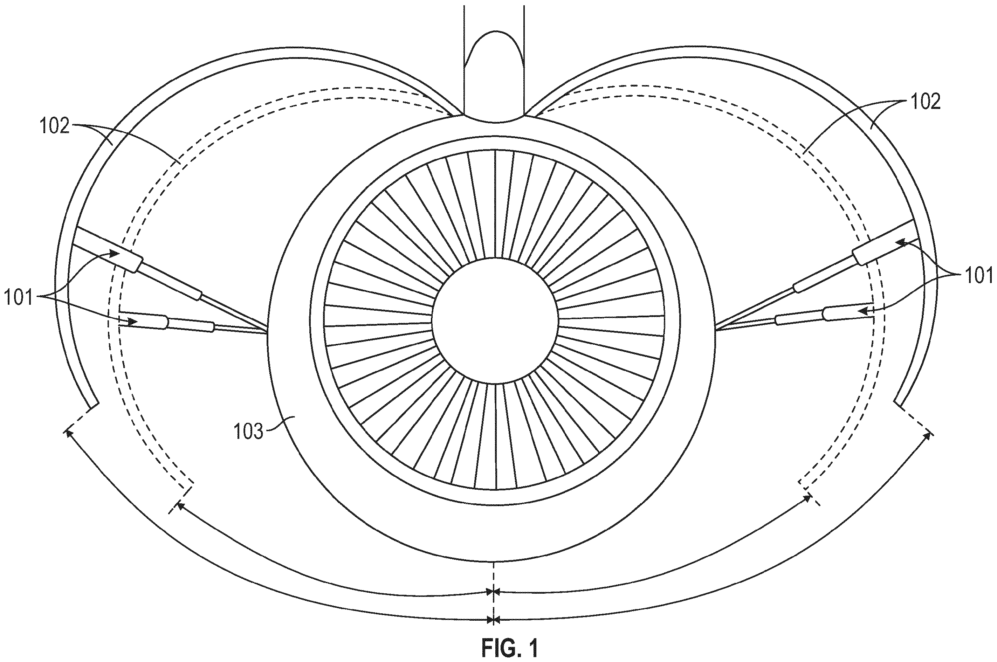

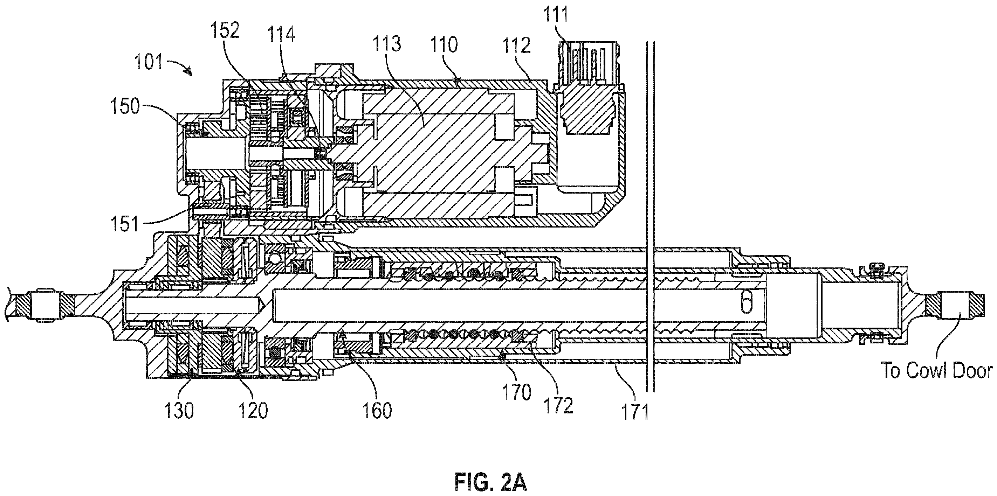

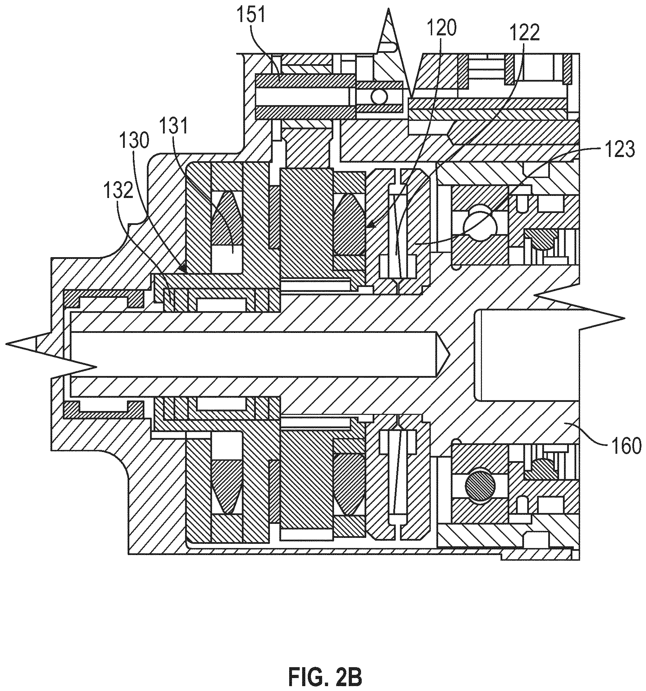

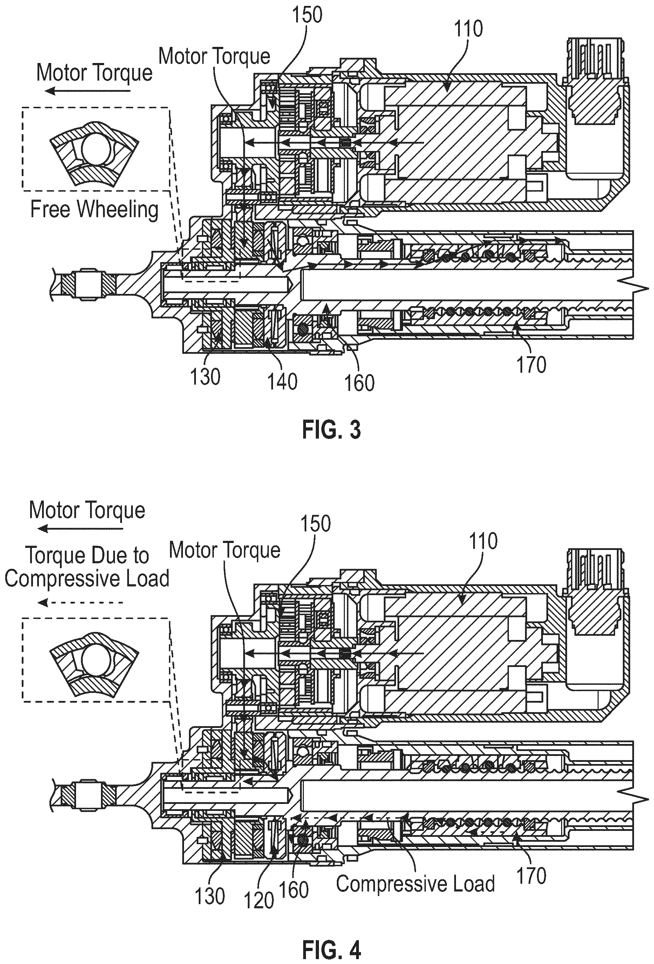

With reference to FIG. 1, to FIGS. 2A and 2B and to FIGS. 3 and 4, an electromechanical actuator architecture 101 is provided for use with a cowl door 102 of an aircraft engine nacelle 103, for example. The electromechanical actuator architecture 101 includes a motor 110 configured to generate torque for extension and for retraction of the cowl door 102, a first clutch 120, a no-back unit 130 including a friction clutch 131 and a one-way clutch 132, a modular gear train 150 that is operably interposed between the motor 110 and the first clutch 120 and between the motor 110 and the no-back unit 130 and a ball screw 160 with a coaxial external cylinder 170 that connects with the cowl door 102.

The motor 110 includes a connector 111 by which the motor 110 is connectable to external aircraft systems, a motor housing 112 that provides support for the motor 110, a rotor-stator 113 that generates power and a sun gear 114 which is rotatable by the power generated by the rotor-stator 113. The modular gear train 150 can include a spur gear train 151 and an epicyclic gear train 152 that is followed by the spur gear train 151. The first clutch 120 and the no-back unit 130 are disposed on opposite sides of the spur gear train 151. The epicyclic gear train 152 is connected to the sun gear 114 and can include or be provided as a planetary gear train that can include a modifiable number of planetary gear stages based on torque and speed requirements.

The ball screw 160 with the coaxial external cylinder 170 includes a shroud 171 and an inner cylinder 172 surrounded by the shroud 171 and can be formed of at least one of steel cylinders, composite cylinders and hybrid steel and composite cylinders. Different sizes of the ball screw 160 can be used based on a required stroke and based on requirements for extension and retraction times. The shroud 171 and the inner cylinder 172 provides for a relatively light assembly that meets stringent vibration requirements.

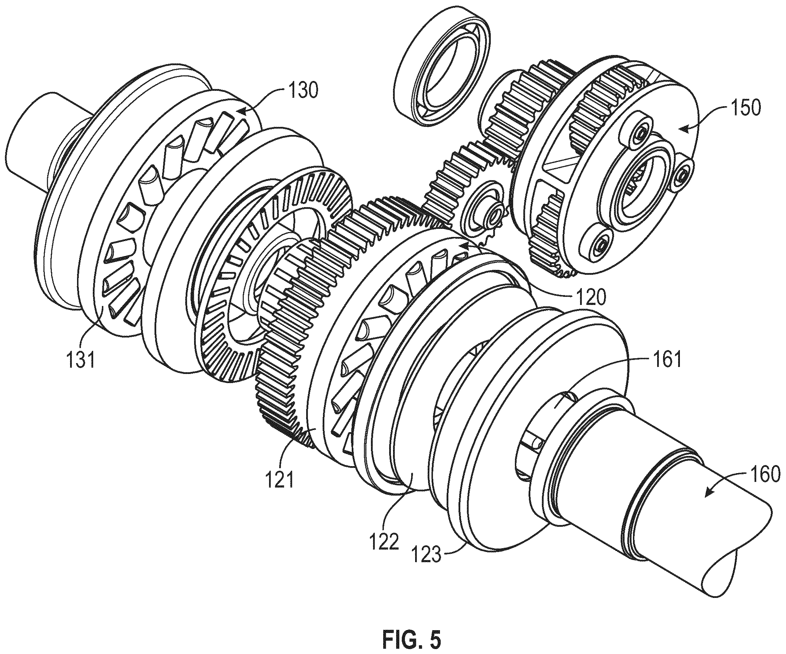

Regarding the vibration requirements, bending modes of the ball screw 160 can be critical and a minimum sized section 161 thereof (see FIG. 5) near the first clutch 120 can be a weakest section in terms of its ability to transfer vibratory energy. This is overcome in accordance with embodiments, however, by bringing the shroud 171 into a vibration load path whereby the vibration energy from the ball screw 160 proceeds to and through the shroud 171. This effectively bypasses the minimum sized section 161 from a majority of vibration energy.

As shown in FIG. 3, torque generated by the motor 110 for extension of the cowl door 102 is transferable to the cowl door 102 by the modular gear train 150, the ball screw 160 and the coaxial external cylinder 170 via the first clutch 120. As shown in FIG. 4, during retraction of the cowl door 102, a weight of the cowl door 102 and an aerodynamic load compress the coaxial external cylinder 170 and the ball screw 160 with loads. These loads are transferred to the no-back unit 130. The no-back unit 130 is configured to maintain a position of the cowl door 102 in an event torque generation by the motor 110 ceases.

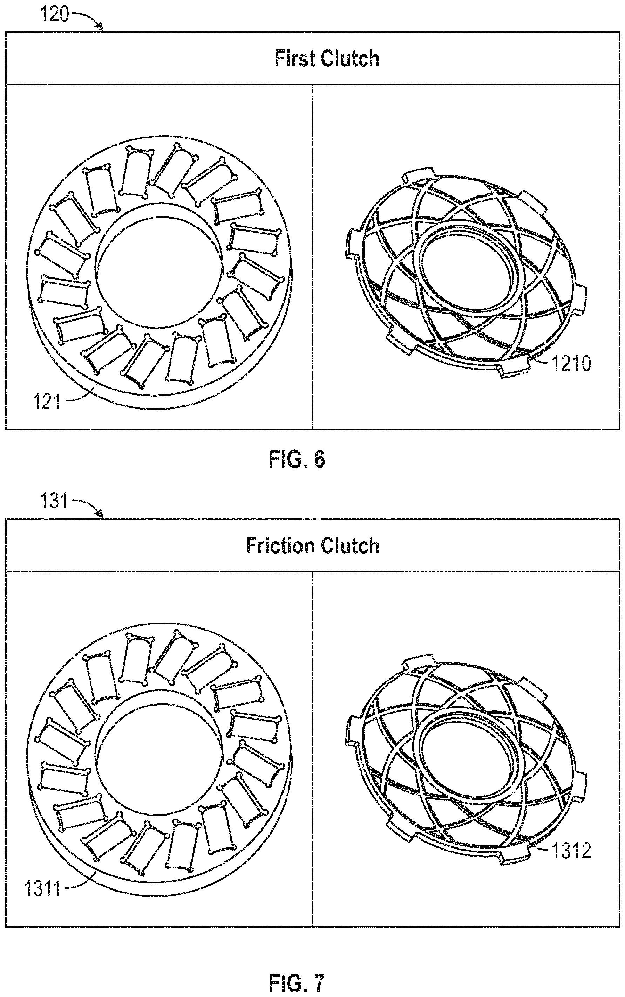

With reference to FIG. 5 and with additional reference to FIG. 6, at least the first clutch 120 is configured to generate a resistive torque during rotation which is proportional to an applied axial load. The first clutch 120 can include one of a skewed roller 121 (see FIG. 5) and a Kevlar^{™}-based friction disc 1210 (see FIG. 6). In either case as shown in FIG. 5 (which only illustrates the skewed roller 121 for clarity), the first clutch 120 can further include a disc spring 122 and a disc spring housing 123. The disc spring housing 123 operably surrounds the disc spring 122, abuts with the skewed roller 121 (or the Kevlar^{™}-based friction disc 1210) and is connected to the minimum sized section 161 of the ball screw 160.

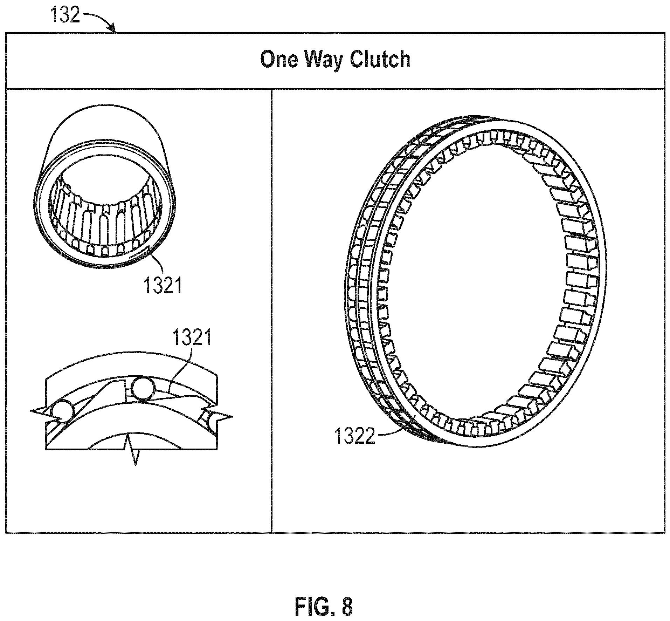

With reference back to FIG. 2B, with continued reference to FIG. 5 and with additional reference to FIGS. 7 and 8, the friction clutch 131 of the no-back unit 130 can include one of a skewed roller 1311 (as shown in FIG. 5) and a Kevlar^{™}-based friction disc 1312 (see FIG. 7) and the one-way clutch 132 (as shown in FIG. 2B) of the no-back unit 130 can include one of a one-way roller clutch 1321 and a one-way sprag clutch 1322 (see FIG. 8).

In accordance with embodiments, a skew angle of each of the skewed roller 121 of the first clutch 120 and the skewed roller 1311 of the no-back unit 130 can be varied to vary a resistive torque provided thereby and to maintain a spatial envelope according to instant requirements.

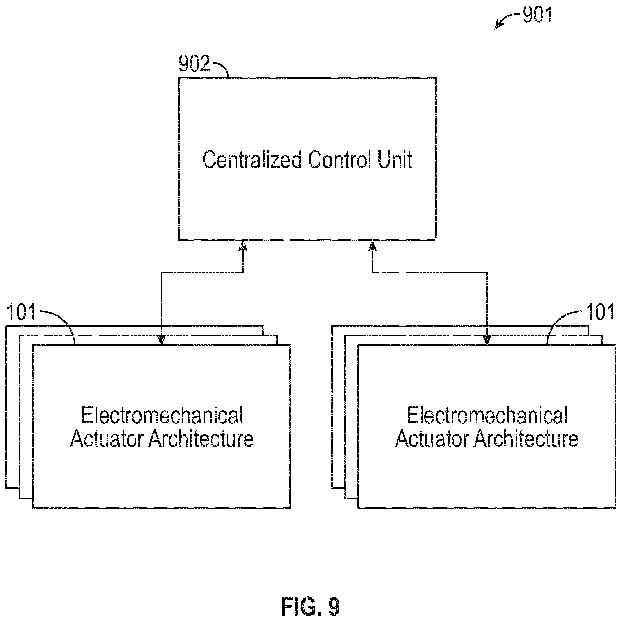

With reference to FIG. 9, a centralized control system 901 is provided for controlling extensions and retractions of cowl doors of engine nacelles of an aircraft, such as the cowl door 102 of FIG. 1. The centralized control system 901 includes an electromechanical actuator architecture, such as the electromechanical actuator architecture 101 of FIGS. 1-8, for each of the cowl doors 102 and a single centralized control unit 902 that is configured to operate the motor 110 of each of the electromechanical actuator architectures 101.

Technical effects and benefits of the present invention are the provision of an electromechanical actuator architecture exhibiting a modular and compact design that includes a skewed clutch roller and a skewed no-back roller. By varying the skew angles of the skewed clutch roller and the skewed no-back roller, a resistive torque can be varied to maintain a given spatial envelope. The electromechanical actuator architecture further includes a planetary gear train that allows for an increased or decreased number of planetary gear stages based on torque and speed requirements, a ball screw mechanism in which different ball screw sizes can be used based on required stroke, extension and retraction times and a co-axial cylinder structure that is relatively light while meeting stringent vibration requirements.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the technical concepts in the form disclosed. Many modifications and variations will be apparent that fall within the scope of the invention as defined by the claims. The embodiments were chosen and described in order to best explain the principles of the invention and the practical application, and to enable others of ordinary skill in the art to understand the invention for various embodiments with various modifications as are suited to the particular use contemplated.

While the preferred embodiments to the invention have been described, it will be understood that those skilled in the art, both now and in the future, may make various improvements and enhancements which fall within the scope of the claims which follow. These claims should be construed to maintain the proper protection for the invention first described.

## Claims

1. An electromechanical actuator architecture for a cowl door of an aircraft engine nacelle, the electromechanical actuator architecture comprising:
a first clutch (120);
a no-back unit (130) comprising a friction clutch (131) and a one-way clutch (132); and
a ball screw (160) with two coaxial external cylinders (170),
wherein:
torque generated for actuator extension is transferable to the ball screw (160) and the coaxial external cylinders (170) via the first clutch (120), and,
during actuator retraction, cowl door weight and an aerodynamic load compress the coaxial external cylinders and the ball screw with loads that are transferred to the no-back unit (130) which is configured to maintain actuator position in an event generation of the torque ceases.

2. The electromechanical actuator architecture according to claim 1, further comprising:
a motor (110) configured to generate the torque; and
a modular gear train (150) operably interposed between the motor and the first clutch and between the motor and the no-back unit.

3. The electromechanical actuator architecture according to claim 2, wherein the modular gear train comprises a spur gear train (151) and an epicyclic gear train (152).

4. An electromechanical actuator architecture for a cowl door of an aircraft engine nacelle, the electromechanical actuator architecture comprising:
a motor (110) configured to generate torque;
a first clutch (120);
a no-back unit (130) comprising a friction clutch (131) and a one-way clutch (132); and
a ball screw (160) with a coaxial external cylinder (170),
wherein:
torque generated by the motor for cowl door extension is transferable to the cowl door by the ball screw (160) and the coaxial external cylinder (170) via the first clutch (120), and,
during cowl door retraction, cowl door weight and an aerodynamic load compress the coaxial external cylinder and the ball screw with loads transferred to the no-back unit (130), which is configured to maintain a cowl door position in an event torque generation by the motor ceases.

5. The electromechanical actuator architecture according to claim 4, further comprising a modular gear train (150) operably interposed between the motor and the first clutch and between the motor and the no-back unit,
wherein the modular gear train comprises a spur gear train (151) and an epicyclic gear (152).

6. The electromechanical actuator architecture according to any preceding claim, wherein at least the first clutch (120) is configured to generate a resistive torque during rotation which is proportional to an applied axial load.

7. An electromechanical actuator architecture for a cowl door of an aircraft engine nacelle, the electromechanical actuator architecture comprising:
a motor (110) configured to generate torque;
a first clutch (120);
a no-back unit (130) comprising a friction clutch (131) and a one-way clutch (132);
a modular gear train (150) operably interposed between the motor and the first clutch and between the motor and the no-back unit; and
a ball screw (160) with a coaxial external cylinder (170),
wherein:
torque generated by the motor for cowl door extension is transferable to the cowl door by the ball screw (160) and the coaxial external cylinder (170) via the module gear train (150) and the first clutch (120), and,
during cowl door retraction, cowl door weight and an aerodynamic load compress the coaxial external cylinder (170) and the ball screw (160) with loads transferred to the no-back unit (130), which is configured to maintain a cowl door position in an event torque generation by the motor ceases.

8. The electromechanical actuator architecture according to claim 7, wherein the modular gear train (150) comprises a spur gear train (151) and an epicyclic gear train (152).

9. The electromechanical actuator architecture according to claim 7 or 8, wherein at least first clutch (120) is configured to generate a resistive torque during rotation which is proportional to an applied axial load.

10. The electromechanical actuator architecture according to any preceding claim, wherein:
the first clutch (120) comprises one of a Kevlar^{™}-based friction disc (1210) and a skewed roller (121),
the friction clutch of the no-back unit comprises one of a Kevlar^{™}-based friction disc and a skewed roller, and
the one-way clutch of the no-back unit comprises one of a roller clutch (1321) and a sprag clutch (1322).

11. The electromechanical actuator architecture according to any preceding claim, wherein the ball screw with the coaxial external cylinder comprises a shroud (171) and an inner cylinder (172) surrounded by the shroud.

12. The electromechanical actuator architecture according to claim 11, wherein the ball screw with the coaxial external cylinder comprises at least one of steel cylinders, composite cylinders and hybrid steel and composite cylinders.

13. A centralized control system for controlling extensions and retractions of cowl doors (102) of engine nacelles (103) of an aircraft, comprising:
an electromechanical actuator architecture (101) according to claim 7 for each of the cowl doors; and
a single centralized control unit (902) configured to operate the motor of each of the electromechanical actuator architectures.
